# EUROPÄISCHE PATENTSCHRIFT

(11) **EP 1 207 262 B1**
(45) Veröffentlichungstag und Bekanntmachung des Hinweises auf die Patenterteilung: **07.12.2005**
(21) Anmeldenummer: 01122705.5
(22) Anmeldetag: 21.09.2001
(51) Int. Cl.: E05F 15/20, E05C 17/00, E05C 17/56, B60J 5/04, B60Q 1/48, G01S 13/93

(54) **Fahrzeug mit wenigstens einer schwenkbaren Tür**
Vehicle with at least one pivoting door
Véhicule avec au moins une porte pivotante

(30) Priorität: 15.11.2000 DE 10056569
(43) Veröffentlichungstag der Anmeldung: 22.05.2002
(73) Patentinhaber: Bayerische Motoren Werke Aktiengesellschaft, 80809 München (DE)
(72) Erfinder: Kehrer, Manfred, 85238 Petershausen (DE)

(56) Entgegenhaltungen:
- EP-A- 0 968 863
- DE-A- 19 537 619
- DE-A- 19 836 310
- DE-A- 19 959 990
- PATENT ABSTRACTS OF JAPAN vol. 017, no. 049 (P-1478), 29. Januar 1993 (1993-01-29) -& JP 04 262289 A (MITSUBISHI ELECTRIC CORP), 17. September 1992 (1992-09-17)

## Beschreibung

Die Erfindung betrifft ein Fahrzeug entsprechend dem Oberbegriff des Patentanspruchs 1.

Ein derartiges Fahrzeug ist aus der DE 198 36 310 A und der DE 195 33 804 A bekannt. Dabei wird beim Öffnen einer der Türen der maximale Türöffnungswinkel selbsttätig den jeweiligen Platzverhältnissen in der Weise angepasst wird, dass weder die Tür noch neben dem Fahrzeug befindliche Gegenstände, insbesondere andere Fahrzeuge, durch Aufeinandertreffen beschädigt werden können. Hierzu ist ein berührungsfrei arbeitender Sensor am Türrand vorgesehen, der bei Annäherung an einen dem Fahrzeug benachbarten Gegenstand während des Öffnens der Tür in einem definierten Abstand zu diesem Gegenstand nahezu verzögerungsfrei eine TürFeststellvorrichtung im Sinne einer Verriegelung auslöst

Die bekannte Vorrichtung ist aufwendig, da sie einen Sensor voraussetzt, der den gesamten Öffnungsraum der Tür erfasst. Nur dann sind Beschädigungen der Tür sicher zu vermeiden. Zudem wird der Sensor in der Regel erst während der Öffnungsbewegung der Tür wirksam. Gerade wenn die Tür besonders schwungvoll betätigt wird, besteht die Gefahr der Beschädigung aufgrund der nicht rechtzeitigen Wirkung der Feststellvorrichtung.

Demgegenüber liegt der Erfindung die Aufgabe zugrunde, ein gattungsgemäßes Fahrzeug dahingehend zu verbessern, dass beim Öffnen einer weder die Tür noch neben dem Fahrzeug befindliche Gegenstände, insbesondere andere Fahrzeuge, durch Aufeinandertreffen sicher nicht beschädigt werden und gleichzeitig der dafür erforderliche Aufwand gering ist.

Diese Aufgabe wird mit den kennzeichnenden Merkmalen des Patentanspruches 1 gelöst.

Wesentlich dabei ist, dass nicht eine besondere Türsensorik, sondern die ohnehin vorhandene Abstandssensorik verwendet wird, die eine Beschädigung des Fahrzeugs bzw. benachbarter Fahrzeuge beim Einparken verhindert wird. Diese Sensorik arbeitet häufig auf der Basis von Ultraschall und ist unter de Bezeichnung Park-Distance-Control bekannt. Mögliche Hindernisse für die Tür werden beim Einparken bzw. während der Vorbeifahrt erkannt und ihre Lage beim Stillstand des Fahrzeugs aufgrund der Analyse der Fahrzeugbewegung in Bezug auf das Hindernis erkannt. Im Gegensatz zur eingangs genannten Vorrichtung wird das Hindernis unmittelbar vor bzw. während der Tür-Öffnungsbewegung nicht vermessen.

Vorteilhafte Ausgestaltungen der Erfindung sind Gegenstand der weiteren Patentansprüche 2 und 3.

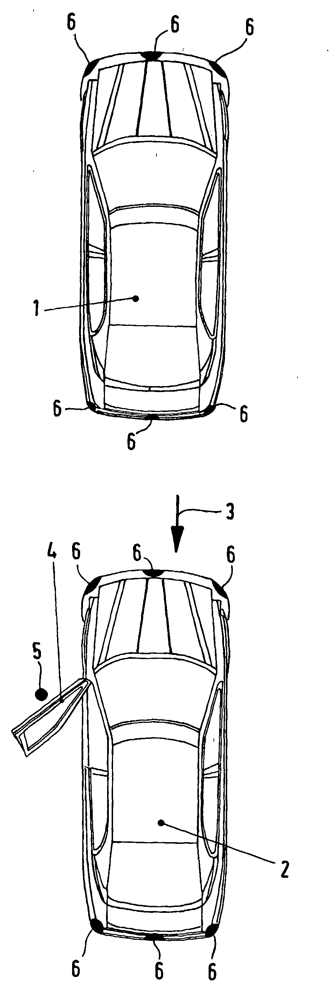

Ein Ausführungsbeispiel der Erfindung wird nachfolgend anhand der Zeichnung näher erläutert, in der in Draufsicht ein Fahrzeug in zwei Positionen dargestellt ist.

Das Fahrzeug befindet sich zunächst in der oberen Position 1 und soll rückwärts (Pfeil 3) in die mit 2 bezeichnete Park-Position gefahren werden. Dabei befindet sich ein Hindernis 5 im Bewegungsbereich einer Fahrzeugtür 4.

Die Existenz und relative Lage des Hindernisses 5 wird während der Bewegung des Fahrzeugs von 1 nach 2 mit Hilfe von einem Sensor, z.B. Ultraschall-Abstandsgebern 6, erkennbar, die sich an den gezeigten Stellen in den vier Eckstellen und den beiden Mittelstellen des Fahrzeugs befinden. Üblicherweise sind bei einer Rückwärtsfahrt nur die drei rückwärtigen, bei einer Vorwärtsfahrt nur die vorderen drei Abstandsgeber aktiviert.

Dadurch wird das Hindernis durch die hinteren Abstandsgeber erkannt. Die beiden dem Hindernis nächstgelegenen Abstandsgeber bestimmen den jeweiligen Abstand des Hindernisses. Bei der Bewegung des Fahrzeugs wird durch die relative Änderung der jeweiligen Abstände auch die Lage des Hindernisses in Bezug auf das Fahrzeug erkennbar (Kreuzpeilung). Zusätzliche Informationen einer fahrzeuginternen Sensorik, wie Weggeber für die während der Bewegung des Fahrzeugs zurückgelegten Weg und Lenkwinkelgeber für die Bewegungsbahn des Fahrzeugs können als ergänzende Informationsquellen herangezogen werden.

Wenn das Fahrzeug die Position 2 erreicht, ist die Lage des Hindernisses 5 bekannt, ohne dass sie in der dargestellten Lage durch einen der Sensoren, z.B. Abstandsgeber 6, direkt erfassbar ist. Die Gefahr einer Kollision der Tür mit dem Hindernis ist bekannt, noch bevor die Tür zum Aussteigen geöffnet wird. Damit kann beispielsweise bei Berühren des Türgriffs oder Annähern an den Innen-Türgriff ein optisches oder akustisches Warnsignal ausgegeben werden oder der Türgriff unwirksam gemacht oder in seiner Wirkungsweise geändert werden.

## Patentansprüche

1. Fahrzeug mit wenigstens einer schwenkbaren Tür (4) und mit einer Einrichtung zum Verhinderns einer Kollision der Tür (4) mit einem dem Fahrzeug benachbarten Gegenstand (5) während des Öffnens der Tür,
**dadurch gekennzeichnet,**
**dass** ein Sensor (6) mit nachgeschalteter Auswertelogik während einer dem Öffnen der Tür (4) unmittelbar vorausgehenden Fahrzeugbewegung den Gegenstand (5) in seiner Lage und in seiner Lageänderung relativ zum Fahrzeug erfasst und seine Lage beim Stillstand des Fahrzeugs aufgrund der Analyse der Fahrzeugbewegung in Bezug auf das durch den Gegenstand (5) gebildetes Hindernis erkennt,
und **dass** dann, wenn die Gefahr der Kollision zwischen Gegenstand (5) und Fahrzeugtür (4) besteht, eine diese Gefahr verringernde Maßnahme auslösbar ist.

2. Fahrzeug nach Anspruch 1, **dadurch gekennzeichnet, dass** eine Feststellvorrichtung für die Türbewegung auslösbar ist.

3. Fahrzeug nach Anspruch 1 oder 2, **dadurch gekennzeichnet, dass** ein Warnsignal auslösbar ist.

## Claims

1. A vehicle with at least one pivotable door (4) and a device for preventing impact between the door (4) and a neighbouring object (5) when the door opens,
**characterised in that** during a movement of the vehicle immediately before the door (4) is opened, a sensor (6) detects the position of the object (5) and the alteration thereof relative to the vehicle and recognises the position of the object when the vehicle is stationary, by analysis of the movement of the vehicle relative to the obstacle in the form of the object (5), and if there is a risk of impact between the object (5) and the vehicle door (4), steps to reduce the risk can be triggered.

2. A vehicle according to claim 1, **characterised in that** a device for immobilising the door is triggerable.

3. A vehicle according to claim 1 or 2, **characterised in that** an alarm signal can be triggered.

## Revendications

1. Véhicule avec au moins une porte pivotante (4) et un dispositif pour empêcher une collision de la porte (4) avec un objet (5) se trouvant à proximité du véhicule pendant l'ouverture de la porte,
**caractérisé en ce qu'**
un détecteur (6) avec logique d'évaluation montée en aval détecte, pendant un déplacement du véhicule précédant directement l'ouverture de la porte (4), l'objet (5) dans son emplacement et dans son changement d'emplacement relativement au véhicule et reconnaît son emplacement pendant l'immobilisation du véhicule, en raison de l'analyse du déplacement du véhicule par rapport à l'obstacle formé par l'objet (5), et
si le risque de collision entre l'objet (5) et la porte (4) du véhicule existe, une mesure réduisant ce risque peut être déclenchée.

2. Véhicule selon la revendication 1,
**caractérisé en ce qu'**
un dispositif d'immobilisation du mouvement de la porte peut être déclenché.

3. Véhicule selon la revendication 1 ou 2,
**caractérisé en ce qu'**
un signal d'avertissement peut être déclenché.
